Europäisches Patentamt

European Patent Office

Office européen des brevets

(11) Publication number : **0 390 221 B1**

# (12) EUROPEAN PATENT SPECIFICATION

(45) Date of publication of patent specification :
07.06.95 Bulletin 95/23

(51) Int. Cl.⁶ : **G11B 11/10**, // G11B5/60

(21) Application number : 90106207.5

(22) Date of filing : 30.03.90

(54) **Magneto-optical recording apparatus.**

(30) Priority : 31.03.89 JP 78235/89

(43) Date of publication of application :
03.10.90 Bulletin 90/40

(45) Publication of the grant of the patent :
07.06.95 Bulletin 95/23

(84) Designated Contracting States :
DE FR GB

(56) References cited :
DE-A- 3 804 733
REVIEW OF THE ELECTRICAL COMMUNI-
CATION LABORATORIES, vol. 28, no. 5-6,1980,
Tokyo,JP;pages 405 - 414; A. TAGO et al.:
"Methods of Estimating Mechanical Charac-
teristics for Magnetic Recording Disks"
PATENT ABSTRACTS OF JAPAN,vol. 11, no.
219 (P-596)(2666) 16 July 1987; & JP-A-62 036
760

(56) References cited :
IEEE TRANSACTIONS ON MAGNETICS, vol.
MAG17, no. 6, November 1981, New
York,US;pages 2899 - 2901; S. SUZUKI et al.:
"High Density Magnetic Recording Heads for
Disk"
PATENT ABSTRACTS OF JAPAN,vol. 7, no.
228 (P-228)(1373)8 October 1983; & JP-A-58
118 025

(73) Proprietor : HITACHI, LTD.
6, Kanda Surugadai 4-chome
Chiyoda-ku, Tokyo 101 (JP)

(72) Inventor : Akagi, Kyo
18-6-101, Shinmachi-3-chome
Fuchu-shi (JP)
Inventor : Nakao, Takeshi
2327-102, Kamitsuruma
Sagamihara-shi (JP)
Inventor : Ojima, Masahiro
14-26, Shakujiimachi-1-chome
Nerima-ku, Tokyo (JP)

(74) Representative : Patentanwälte Beetz - Timpe -
Siegfried Schmitt-Fumian - Mayr
Steinsdorfstrasse 10
D-80538 München (DE)

## Description

### BACKGROUND OF THE INVENTION

This invention relates to a magneto-optical recording apparatus in which a magnetic head for magnetic field modulation recording purpose is mounted on a slider and floated away from a recording medium so that information can be recorded on the recording medium by the floating magnetic head in a crash-free relation while maintaining the required magnetic field strength and without being adversely affected by dust which may intrude into the apparatus.

A magnetic field modulation coil of a magnetic head used for recording information on a recording film of a magneto-optical disk is effectively to be located as close to the recording film as possible so as to obtain a high C/N ratio. However, in the case of a magneto-optical recording apparatus of media exchangeable type, a recording medium rotating at a high speed tends to greatly deviate by a maximum distance of $\pm 100$ $\mu$m from its normal plane of rotation. Therefore, a stationary coil of a magnetic head used for magnetic field modulation purpose is required to be spaced apart from the surface of the recording medium by a distance of at least 100 $\mu$m. In view of such a situation, JP-A-63-217548 proposes an apparatus in which a floating magnetic head using a head slider is employed as a means for stably bringing such a magnetic field modulation coil to a position close to the surface of a recording film while maintaining a predetermined distance between them.

### SUMMARY OF THE INVENTION

However, the prior art apparatus disclosed in JP-A-63-217548 has such a weak point that its reliability cannot be secured against dust externally intruding into the apparatus. That is, there is a great tendency of occurrence of the so-called head crash which means that the surface of the recording medium is contacted by the magnetic head due to unstable floating movement of the magnetic head attributable to intrusion of dust and attachment of the dust on the surface of the magnetic head slider.

DE-A-3 804 733 discloses a magnetic head slider and a magneto-optical recording apparatus with such a slider having the precharacterising features of the appended claims 1 and 8 respectively.

It is an object of the present invention to provide a highly reliable, magneto-optical recording apparatus which employs a floating magnetic head and in which undesirable head crash hardly occurs.

This object is reached by the characterising features of claims 1 and 8.

When the dust is, for example, sand having no stickiness, the flying height of the floating magnetic head is increased so as to avoid biting of the dust between the magnetic head and the disk. In a preferred form, when the dust is, for example, sticky smoke of a cigarette, the attached dust is removed by contact start/stop (CS/S) operation thereby securing the stability of floating movement of the magnetic head. In the magnetic head slider including one or plural floating rails, it is very effective, for the purpose of increasing the flying height, to increase the width of the slider rails and to decrease the value of the load imposed on the slider. When the slider is of a plain type, the flying height and the stability of head floating can be secured by optimizing its taper length and taper angle. On the other hand, when the slider is of a crown type, the flying height and the stability of head floating can be secured by optimizing the height of its projecting surface and the position of the apex of its projecting surface.

The flying height of the head slider having the optimized configuration is 10 $\mu$m to 50 $\mu$m which is larger than the maximum value of the particle size of dust particles floating in an environment of an ordinary room. Therefore, in such an environment, the intruding dust would neither bite into the surface of the head slider nor into the surface of the recording medium. Further, the dust that may adhere to the surface of the head slider or the surface of the recording medium is easily stripped off when the surface of the head slider is brought at a low speed into contact with the surface of the recording medium during the contact start/stop operation.

### BRIEF DESCRIPTION OF THE DRAWINGS

Fig. 1A is a block diagram of a preferred embodiment of the magneto-optical recording apparatus according to the present invention.

Fig. 1B shows schematically the basic configuration of the head slider preferably employed in the apparatus of the present invention.

Fig. 2 generally illustrates the effect of floating a magnetic head slider until it has a large flying height relative to a recording medium.

Fig. 3 is a graph showing the results of actual measurement of the distribution of the particle size of dust particles floating in an ordinary room.

Fig. 4 is a graph showing the results of actual measurement of the relation between the magnetic field strength and the distance between the magnetic head and the recording medium.

Fig. 5 is a graph showing the results of computer simulation to find how the flying height of the magnetic head is influenced by the slider rail width Sw of the magnetic head slider.

Fig. 6 is a graph showing the results of computer simulation to find the relation between the pressurizing load W of the suspension spring and the flying height of the magnetic head.

Fig. 7 is a graph showing the results of computer simulation to find the relation between the slider length Lx and the flying height of the magnetic head.

Fig. 8 is a graph showing the results of computer simulation to find how the floating height of the magnetic head changes when the slider is of a plain type and the taper length of its tapered leading edge is changed.

Fig. 9 is a graph showing the results of computer simulation to find the relation between the flying height and the taper angle of the tapered leading edge of the head slider.

Fig. 10 is a perspective view to show another basic configuration of the head slider preferably used in the present invention.

Fig. 11 is a graph showing the results of computer simulation to find the relation between the flying height of the magnetic head and the position of the apex of the slider surface of second degree in the head slider shown in Fig. 10.

Fig. 12 is a graph showing the results of computer simulation to find the relation between the flying height of the magnetic head and the projection and the height of the apex in the head slider shown in Fig. 10.

Figs. 13A, 13B and 13C are conceptual diagrams to illustrate various manners of slider supporting by a suspension spring.

Fig. 14 is a graph showing the relation between the linear velocity of a magneto-optical disk and the distance between the magnetic head and the recording medium in the present invention.

Fig. 15 is a graph showing the relation between the rail width and the taper length of the slider when the linear velocity at a radially innermost part of a 5.25-inch disk is 10 m/s.

## DETAILED DESCRIPTION OF THE EMBODIMENTS

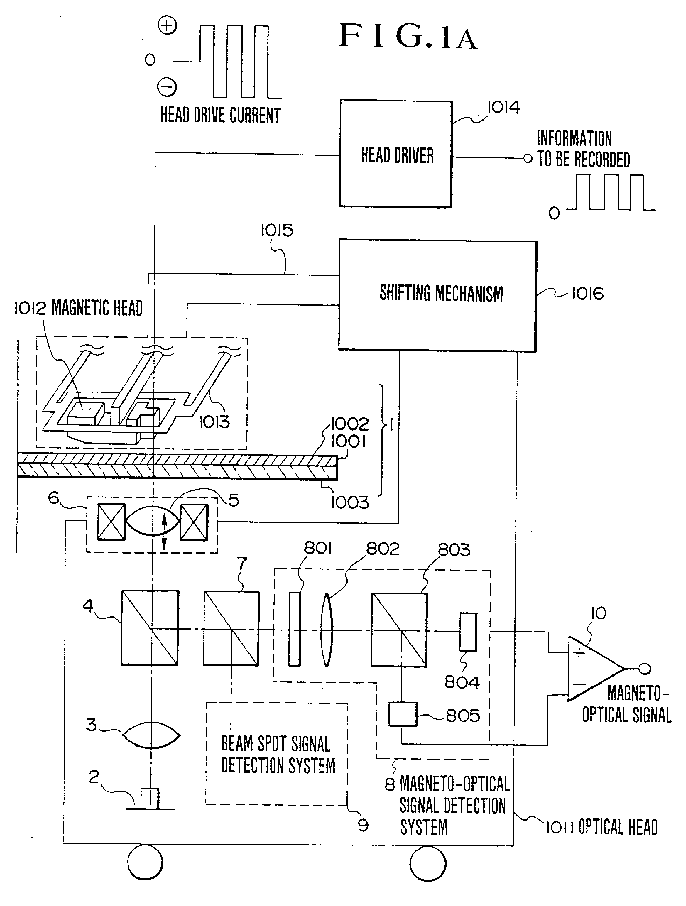

Fig. 1A is a block diagram of a preferred embodiment of the magneto-optical recording apparatus according to the present invention. Referring to Fig. 1A, a magneto-optical disk 1 which is a rotary record carrier includes a disk-shaped transparent base 1003, and a film of a magneto-optical recording medium 1001 formed on one surface of the base 1003 and having a magneto-optical effect, and a protection film 1002 covering the recording medium 1001. In an optical head 1011, a beam of light, for example, a laser beam emitted from a semiconductor laser source 2 is turned into a parallel laser beam by a collimator lens 3 and is then incident on a converging lens 5 through a beam splitter 4. The laser beam converged by the lens 5 is incident on the magneto-optical disk 1 from the side of the disk-shaped transparent base 1003 to form a very small laser beam spot having a diameter of about 1 $\mu$m on the recording film 1001. The converging lens 5 is mounted on an actuator 6 so that the converging lens 5 can follow up vertical movement of the magneto-optical disk 1 thereby always focusing the laser beam on the recording film 1001 and so that the lens 5 can follow up eccentricity of information recording tracks on the magneto-optical disk 1 thereby always forming the spot of the laser beam on any desired track on the disk 1. After the laser beam reflected from the disk 1 passes through the converging lens 5 and is then reflected by the beam splitter 4, the laser beam is guided through another beam splitter 7 to a magneto-optical signal detection purpose optical system 8 and to a beam-spot control signal detection purpose optical system 9 which detects out of focusing, out of tracking, etc.

One form of the magneto-optical signal detection purpose optical system 8 is shown in detail in Fig. 1A. The illustrated magneto-optical signal detection purpose optical system 8 is of a differential signal detection type using a $\lambda/2$ plate 801 and a polarized beam splitter 803. The laser beam guided to the magneto-optical signal detection purpose optical system 8 passes through the $\lambda/2$ plate 801 and a lens 802 and is then split by a polarized beam splitter 803 into polarized beam components s and p which are supplied to beam detectors 804 and 805 respectively to be converted into corresponding electrical signals. These electrical signals are applied to a differential amplifier 10 to appear as a magneto-optical signal from the differential amplifier 10.

A magnetic head 1012 is disposed opposite to the optical head 1011 on the side of the recording film 1001 of the disk 1. For the purpose of illustration, the magnetic-head 1012 is shown in Fig. 1A in a relation rotated through an angle of 90° from its practical arrangement and also in an enlarged perspective fashion. As described later, the magnetic head 1012 is composed of a coil part applying a magnetic field to the recording film 1001 of the disk 1 and a slider part 1017 acting to float the entire magnetic head 1012. During rotation of the disk 1, the magnetic head 1012 is floated by an air pressure induced by the rotation of the disk 1.

The magnetic head 1012 is pressed by a suspension spring 1013 toward the disk 1 by a load as described later. A head shifting mechanism 1016 for vertically shifting the magnetic head 1012 is provided for the purpose of permitting replacement of the magnetic head 1012.

Further, the magnetic head 1012 is integrally coupled by a supporting arm 1015 to the optical head 1011 so as to make interlocking operation with the optical head 1011, so that the magnetic head 1012 can always be located directly above the laser beam spot formed on the disk 1.

The optical head 1011 is moved in the radial direction of the disk 1 by means such as a linear motor or a stepping motor.

For the purpose of recording information on the recording film 1001 of the disk 1, the magnetic head 1012 or the optical head 1011 is driven while modulating the magnetic field or laser beam by the information to be recorded. In the embodiment shown in Fig. 1A, a magnetic head driver circuit 1014 is provided for driving the magnetic head 1012.

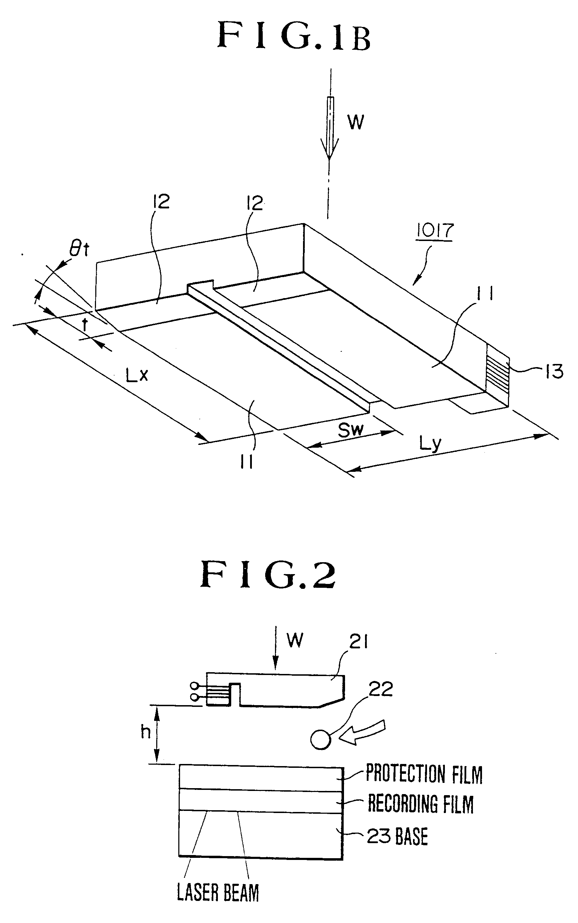

Fig. 1B shows a basic configuration of the head slider 1017 employed in the present invention. Referring to Fig. 1B, the head slider 1017 is of a two rail type having two slider rails 11. Each slider rail 11 acts to produce an air pressure thereby contributing to floating of the magnetic head 1012, and a tapered leading edge portion 12 continuous to each slider rail 11 acts to guide the air pressure toward each slider rail 11. Any desired head floating characteristic can be provided by optimizing the slider rail width Sw, head pressurizing load w, slider length Lx, taper length t and taper angle θt in Fig. 1B. The symbol Ly designates the head width.

Fig. 2 generally illustrates the effect of floating a head slider 21 by a large distance or flying height h relative to a magneto-optical recording disk 23. It will be seen in Fig. 2 that, when the flying height h has a sufficiently large value, a dust particle 22 that may externally intrude into the space between the slider 21 and the recording medium 23 passes through the space without being arrested by the lower surface of the slider 21 and the upper surface of the recording medium 23.

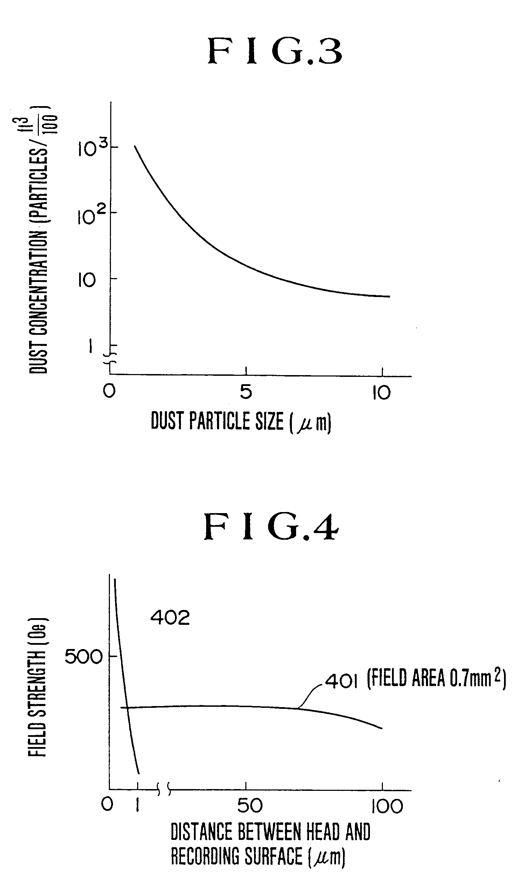

Fig. 3 is a graph showing the results of actual measurement of the distribution of the particle size of dust floating in an ordinary room. It will be seen in Fig. 3 that the number of dust particles having a particle size larger than 1 μm is extremely small. For example, when the slider has a surface area of 50 mm², the maximum number of dust particles having a particle size larger than 10 μm and passing the space beneath the slider will be only 8.44 per 3,000 revolutions of the disk.

Fig. 4 is a graph showing the results of actual measurement of the relation between the magnetic field strength and the distance between the magnetic head and the recording film. In the magneto-optical recording apparatus of the present invention, information is recorded on the recording medium by modulating the magnetic field at the location of the recording meidum irradiated with the spot of the laser beam. In the read mode, the laser beam is directed toward the recording medium so as to detect the recorded information signal. In the record mode, the area (the magnetic field area) to which the magnetic field is applied is wider than the area of the laser beam spot, and, because the minimum unit of the recording density is determined by the diameter of the laser beam spot, the magnetic field area is not pertinent to the recording density. In Fig. 4, the curve 402 represents the characteristic of a conventional magnetic disk apparatus of magnetically writing and reading type. Because, in such a magnetic disk apparatus, the recording density is determined by the magnetic field area itself, it is necessary to limit the magnetic field area to a very small value of the order of, for example, 20 μm x 1 μm. In the case of the magnetic head having such a small magnetic field area, the magnetic field strength becomes so small until finally the recording operation cannot be practically made, as shown by the curve 402 in Fig. 4, with the increase in the distance between the magnetic head and the recording surface of the recording medium. On the other hand, the curve 401 in Fig. 4 represents the characteristic of a magneto-optical disk apparatus using a magnetic head whose magnetic field area need not be limited to a very small value. The magnetic field area of the magnetic head used in this magneto-optical disk apparatus is, for example, larger than 0.1 mm² as described in JP-A-63-217548 cited already. Thus, even when the distance between the magnetic head and the recording surface is increased to a value larger than 10 μm, any appreciable change does not appear in the magnetic field strength, and information can be recorded on the recording surface of the recording medium while maintaining the above distance between the magnetic head and the recording surface. It will be seen from the curve 401 shown in Fig. 4 that, in the magnetic head having its magnetic field area as wide as 0.1 mm² corresponding to the predetermined diameter of the laser beam spot, the magnetic field strength is hardly degraded even when the magnetic head is spaced by a distance of 50 μm from the recording surface.

It can be concluded from Figs. 2, 3 and 4 that the flying height of the magnetic head is to be selected to be not smaller than 10 μm, preferably, between 10 μm and 50 μm, so that the magnetic head slider can operate with high reliability without impairing the magneto-optical recording performance of the magneto-optical recording apparatus.

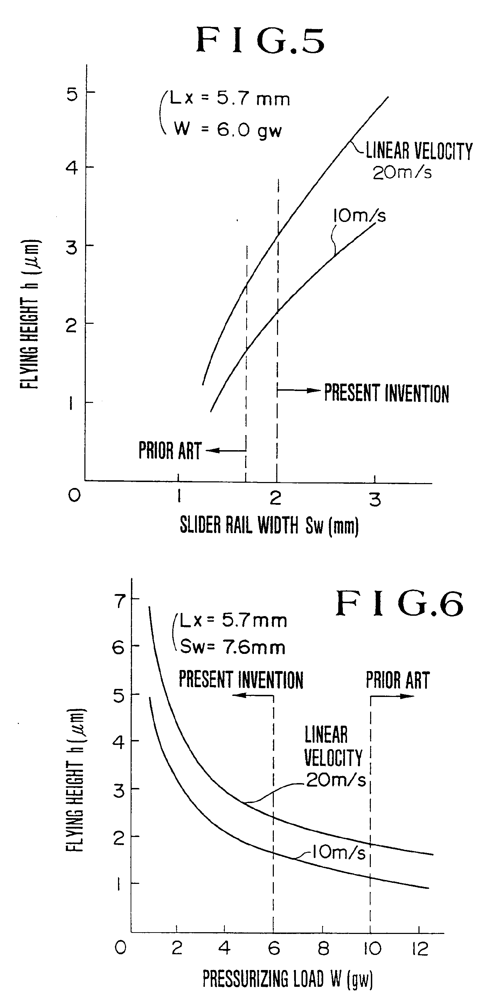

Fig. 5 is a graph showing the results of computer simulation to find how the flying height of the magnetic head is influenced by the slider rail width Sw of the magnetic head slider. In this simulation, the slider length is Lx = 5.7 mm, and the pressurizing load is W = 6.0 gw. The slider rail width Sw exhibits a great effect as a means for simply increasing the flying height. When, as a practical example, the magnetic head is floated to a level above a magneto-optical disk having a diameter of 5 inches, the data area that can be effectively used for recording will decrease with the increase in the surface area of the slider. Further, the larger the slider rail width Sw, the head width Ly becomes larger. Thus, the difference between the linear velocity at the outer slider rail and that at the inner slider rail increases at the radially inner area of the disk, and the flying height h may become non-uniform. Therefore, the value of the head width Ly is limited, and, in the case of the disk having the diameter of 5 inches, the head width Ly shown in Fig. 1B is given by the following relation:

$$Ly < 15 \text{ mm}$$

Fig. 6 is a graph showing the results of computer simulation to find the relation between the pressurizing load W of the suspension spring and the flying height h of the head. In this case, the slider length is Lx = 5.7 mm, and the slider rail width is Sw = 7.6/2 mm. It will be seen in Fig. 6 that the pressurizing load W exhibits also a great effect as a means for increasing the flying height h. Theoretically, there is the following relation among the pressurizing load W, the linear velocity V and the flying height h:

$$W \propto \frac{V}{h^2}$$

The above relation teaches that, when the linear velocity V is maintained constant, the pressurizing load W is inversely proportional to the second power of the flying height h. However, there is the following relation between the pressurizing load W and the air bearing stiffness K of air flowing beneath the slider:

$$W \propto \frac{Kh}{2}$$

The above relation teaches that the smaller the pressurizing load W, the flying height h becomes larger, and the air bearing stiffness K becomes inevitably small. This means that the force of the air bearing supporting the slider surface is weakened, and the flying height h will become unstable against variations that may occur during floating the magnetic head. Therefore, when the stability of floating the magnetic head is taken into consideration, the pressurizing load W imparted by the suspension spring system in use is to be limited to a certain range, and its optimum value is about 5 gw.

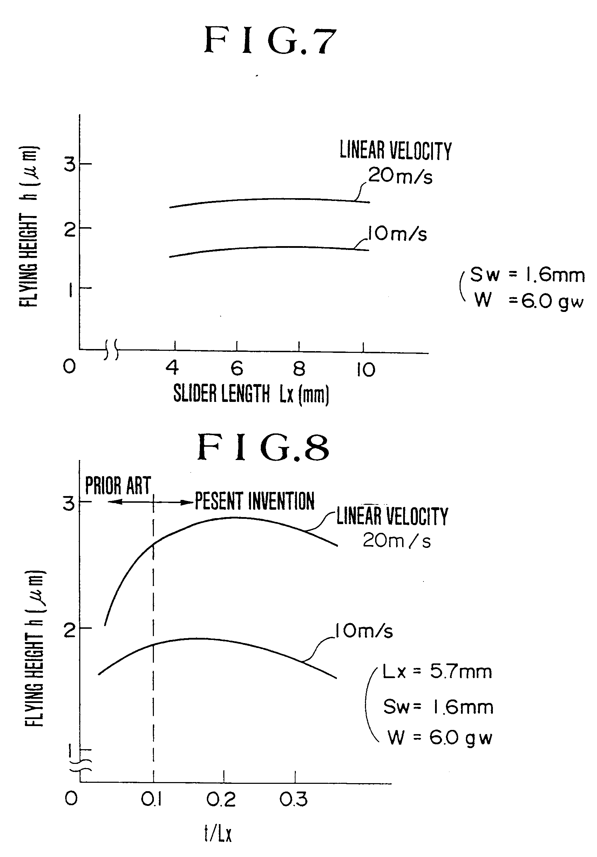

Fig. 7 is a graph showing the results of computer simulation to find the relation between the slider length Lx and the flying height h of the head. It will be seen in Fig. 7 that the flying height h is not appreciably affected by the slider length Lx although it may be affected somewhat by the slider rail width Sw. However, the slider length Lx is to be selected to be at least equal to the head width Ly because the slider length Lx shorter than the head width Ly will result in degraded dynamic floating stability in the pitching direction.

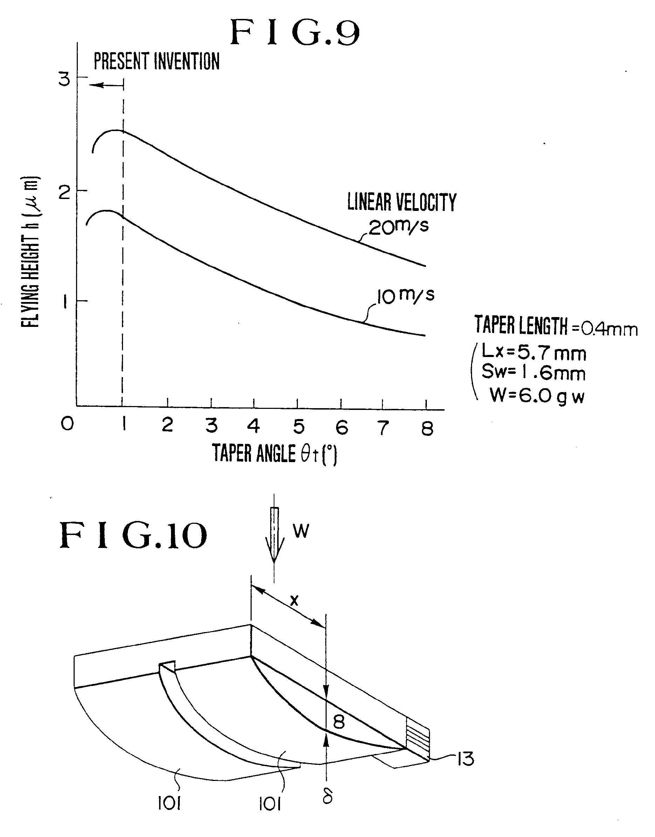

Fig. 8 is a graph showing the results of computer simulation to find how the flying height of the magnetic head changes when the slider is of a plain type and the taper length of its leading edge is changed. The optimum value of this taper length required for ensuring a large flying height is 0.1 to 0.5 in its proportion to the full slider length. Fig. 9 is a graph showing the results of computer simulation to find the relation between the flying height h and the taper angle θt of the head slider. It will be seen in Fig. 9 that this taper angle θt has also an optimum range, and, when the taper angle θt is smaller than 1°, the flying height h decreases, and the dynamic floating stability is degraded.

Fig. 10 is a perspective view to show another basic configuration of the slider preferably used in the present invention. In the basic slider configuration shown in Fig. 10, its slider rails 107 have surfaces of the second degree perpendicular to the sides of the slider. The flying height h changes depending on both the value x representing the distance between the apex of each slider rail surface and the leading edge of the slider rail and the value δ representing the amount or height of protrusion of each of the slider rail surfaces from the slider body.

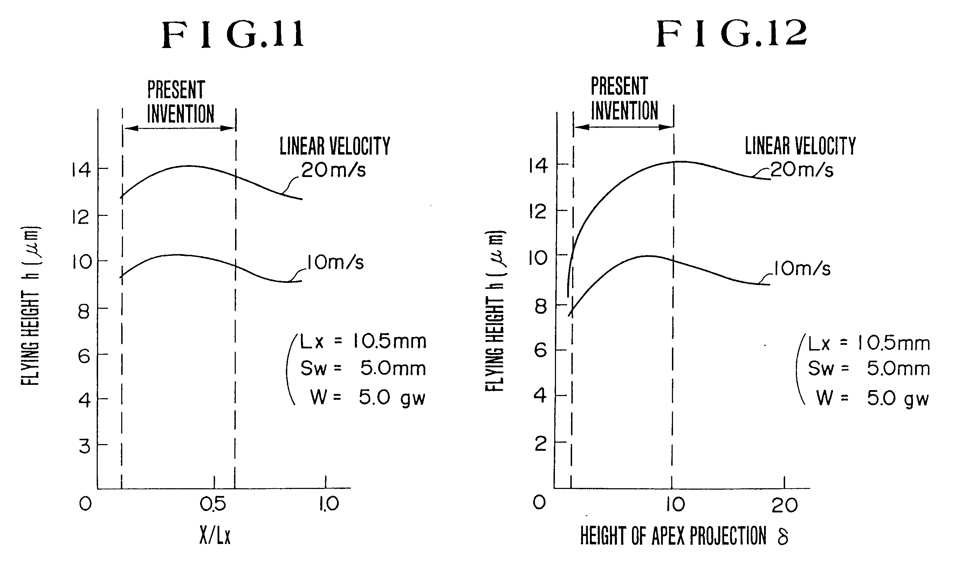

Fig. 11 is a graph showing the results of computer simulation to find the relation between the flying height h and the ratio x/Lx in the slider shown in Fig. 10. It will be seen in Fig. 11 that the flying height h shows its maximum value when the apex described above is located at a position where the ratio x/Lx between the distance x and the full slider length Lx lies between 0.1 and 0.6, although it may slightly differ depending on the size of the slider.

Fig. 12 is a graph showing the results of computer simulation to find the relation between the flying height h and the height of apex projection δ in the slider shown in Fig. 10. It will be seen in Fig. 12 that the flying height h shows a maximum value regardless of the size of the head slider when the height of projection δ at the apex described above is 1 to 10 μm, preferably 4 to 8 μm.

The desired large flying height of the head slider can be achieved by any one of the methods described above, and by a suitable combination of the methods described above, a flying height not smaller than 10 μm to meet the design of the disk apparatus can also be achieved. Dust particles intruding from the outside pass beneath the slider surface, and no rubbing contact or crash occurs between the flying magnetic head and the magneto-optical disk. However, sticky dust particles having a small particle size may be arrested by and adhere to both the slider surface and the recording medium surface. In order to avoid the undesirable adhesion of the sticky dust particles, it is preferable to employ, for example, the contact start-stop (CS/S) operation thereby forcedly removing the adhering sticky dust particles. Although, in such a case, the slider surface necessary makes surface-surface contact with the recording medium surface, application of or coating a lubricant on the slider surface improves the reliability. The effect similar to that described above is also exhibited when the head slider is made of a porous sintered material such as $3A\ell_2O_3 \cdot 2SiO_2$ or SiC impregnated with a lubricant.

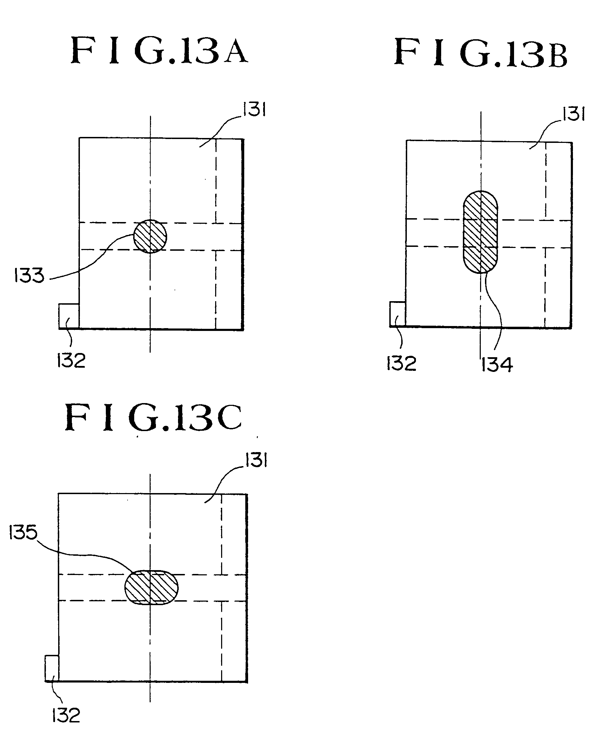

Figs. 13A, 13B and 13C are schematic back plan views to show various manners of supporting a slider 131 carrying a magnetic head element 132. Fig. 13A illustrates a prior art manner of slider supporting by a suspension spring, and a pivot 133 having a circular sectional shape is used to support the slider 131 by the suspension spring in a point contact fashion, thereby providing a great degree of freedom for making pitching, rolling, yawing or like motion. However, in the head slider employed in the present invention, a pivot 134 having an elliptical sectional shape is used to support the slider 131 by the suspension spring in a linear contact fashion as shown in Fig. 13B so as to ensure dynamic flying stability of the slider 131. Thus, this support mode is effective for restricting the degree of freedom of motion in the rolling direction. Also, when a pivot 135 having an elliptical sectional shape is used to support the slider 131 by the suspension spring in a linear contact fashion as shown in Fig. 13C, such a support mode is effective for restricting the degree of freedom of motion in the pitching direction. The present invention exhibits its marked effect even when the individual parameters described above are separetely optimized. However, it is most preferable to optimize the combination of those parameters.

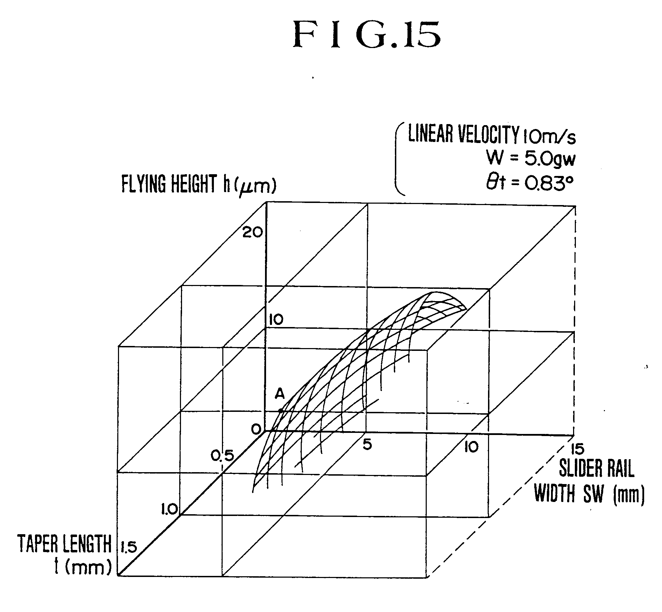

The pressurizing load W among those parameters is desirably selected to be about 5.0 gw from the viewpoint of stabilization of the floating height as described already. The selectable range of the taper angle θt of the tapered leading edge of the head slider is narrow, and the value of about 0.8° at the peak position shown in Fig. 9 is usually adopted. As described already, the reliability of the magneto-optical recording apparatus can be secured when the flying height of the head slider is not smaller than 10 μm in the range of steady operation of the apparatus in view of the distribution of the particle size of dust particles floating in an ordinary room. Fig. 15 is a graph showing the relation between the slider rail width Sw and the taper length t of the head slider when the linear velocity at a radially innermost part of a 5.25-inch disk in a disk apparatus is 10 m/s. The above relation is represented in the form of a saddle in the range where the flying height is not smaller than 10 μm. The point A in Fig. 15 is an optimum point under the condition in which the flying height h is more than 10 μm and the slider rail width Sw is minimum.

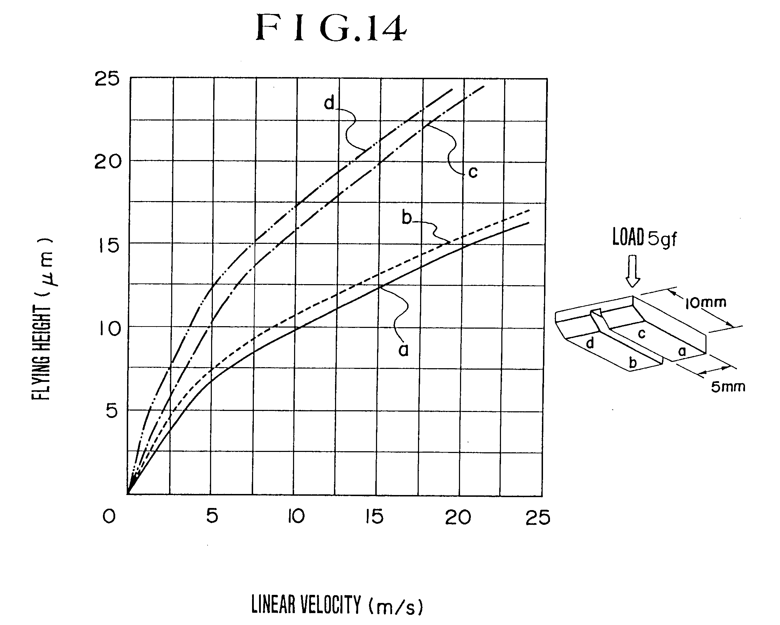

Fig. 14 represents the floating characteristic of the head slider in the vicinity of the point A described above.

Fig. 14 is a graph showing the relation between the linear velocity of a magneto-optical disk and the distance between the magnetic head used in the present invention and the recording film of the disk to illustrate how the magnetic head can be stably floated under an optimized condition. When the principle of floating the magnetic head according to the present invention is applied to a 3.5-inch disk or a 5.25-inch disk, the size of the magnetic head slider is limited from the aspect of the efficiency of utilization of the disk surface. In the form of the magnetic head slider shown in Fig. 14, the slider carrying the magnetic head having a width of about 10 mm is designed to have a length of 10 mm and a slider rail width of 5 mm and is pressurized by a load of 5 gf. In this case, the flying height and stability of the floating magnetic head are taken into account so as to optimize the individual parameters. The curves $\underline{a}$ and $\underline{c}$ shown in Fig. 14 represent actually measured values of the flying height of respective points $\underline{a}$ and $\underline{c}$ located on the radially inner side of the disk. It can be seen from Fig. 14 that, when, for example, the 5.25-inch disk is rotated in its operating linear velocity range between 10 m/s and 20 m/s, a flying height not smaller than 10 μm can be secured.

It will be understood from the foregoing detailed description of the present invention that the recording characteristic required for a magneto-optical disk can be fully satisfied, and an expected reduction in the reliability of magneto-optical recording due to the use of a floating magnetic head can be minimized by optimizing the flying height and configuration of the magnetic head slider. Therefore, the present invention contributes greatly to the desired excellent performance of a magneto-optical disk apparatus.

## Claims

1. A magnetic head slider (1017) for carrying a magnetic head (1012) used to record a signal on a magneto-optical disk (1),
   **characterized by**
   at least two slider rails (11) each having a width not smaller than, at least 2 mm and a tapered air introducing leading edge portion (12) for producing lift thereby floating said slider, having a taper angle Θt, where $0 \leqq \Theta t \leqq 1°$, so that the magnetic head is spaced apart from a surface of the magneto-optical disk by a distance not smaller than 10 μm.

2. A magnetic head slider according to claim 1, wherein said slider (1017) has a length not smaller than 5 mm.

3. A magnetic head slider according to claim 1 or 2, wherein the ratio between the length of said tapered portion and the full slider length is selected to be 0.1 to 0.5.

4. A magnetic head slider according to one of claims 1 to 3, wherein said slider (1017) is of a crown type having a slider surface of second degree (107), and the apex of said slider surface opposite to said magneto-optical disk (1) is located at a position where the ratio of the distance between the apex and the leading edge of said slider to the full slider length is 0.1 to 0.6.

5. A magnetic head slider according to claim 4, wherein said apex of said slider surface (107) projects by a height of 1 to 10 μm relative to the

leading and trailing edges of said slider.

6. A magnetic disk slider according to one of the claims 1 to 5, wherein said slider (1017) is made of a sintered body of a pore-free or porous material.

7. A magnetic disk slider according to claim 6, wherein means are provided for holding a lubricant on the slider surface.

8. A magneto-optical recording apparatus comprising:
a magnetic head (1012) applying a magnetic field to a magneto-optical disk (1);
a beam source and an optical system (2, 3, 4, 5, 6) directing a laser beam toward said magneto-optical disk;
rotating means for rotating said magneto-optical disk;
**characterized by**
a magnetic head slider (1017) according to at least one of claims 1 to 7.

9. A magneto-optical recording apparatus according to claim 8, wherein a suspension spring (1013) supporting said magnetic head slider (1017) applies a pressurizing load not larger than 6 gw.

10. A magnetic-optical recording apparatus according to claim 8, wherein contact start/stop (CS/S) operation is carried out at a predetermined time interval when said apparatus is in its starting stage or in a stopped state or when said apparatus is under operation.

11. A magneto-optical recording apparatus according to claim 8, wherein said suspension spring (1013) supports said magnetic head slider (1017) by a pivot (134, 135) making linear contact with said suspension spring.

12. A magneto-optical recording apparatus according to claim 8, wherein said magnetic head (1012) performs its information recording operation in a state floated by a distance of 10 to 50 $\mu$m from the surface of said magneto-optical disk (1) by the function of said magnetic head slider (1017).

13. A magneto-optical recording apparatus according to claim 8, wherein said magneto-optical disk (1) is exchangeable.

14. A magneto-optical recording apparatus according to claim 8, wherein a magnetic field region having an area wider than about 0.1 mm$^2$ is provided by the magnetic field applied to said magneto-optical disk (1) from said magnetic head (1012).

**Patentansprüche**

1. Magnetkopfschlitten (1017), der einen Magnetkopf (1012) trägt, der zum Aufnehmen eines Signals auf einer bzw. von einer magneto-optischen Platte (1) verwendet wird,
gekennzeichnet durch
mindestens zwei Schlittenkufen (11), die jeweils eine Breite von nicht weniger als 2 mm und einen abgeschrägten Bereich an der Vorderkante hat (12) zur Lufteinführung und zur Erzeugung eines Auftriebs, wodurch der Schlitten zum Schweben gebracht wird, mit einem Abschrägungswinkel $\Theta t$ mit $0 \leqq \Theta t \leqq 1°$, so daß der Magnetkopf an der Oberfläche der magneto-optischen Platte mit einem Abstand von nicht weniger als 10 $\mu$m beabstandet ist.

2. Magnetkopfschlitten nach Anspruch 1, wobei der Schlitten (1017) eine Länge von nicht weniger als 5 mm hat.

3. Magnetkopfschlitten nach Anspruch 1 oder 2, wobei das Verhältnis zwischen der Länge des abgeschrägten Bereichs und der Gesamtschlittenlänge zwischen 0,1 und 0,5 beträgt.

4. Magnetkopfschlitten nach einem der Ansprüche 1 bis 3, wobei der Schlitten (1017) kronenförmig ist mit einer Schlittenoberfläche zweiten Grades (107) und wobei der Scheitel der Schlittenoberfläche, die der magneto-optischen Platte (1) gegenüberliegt, an einer Stelle liegt, wo das Verhältnis zwischen dem Abstand zwischen dem Scheitel und der Vorderkante des Schlittens zur Gesamtschlittenlänge zwischen 0,1 und 0,6 liegt.

5. Magnetkopfschlitten nach Anspruch 4, wobei der Scheitel der Schlittenoberfläche (107) bezüglich der vorderen und hinteren Kanten des Schlittens um 1 bis 10 $\mu$m in der Höhe vorsteht.

6. Magnetkopfschlitten nach einem der Ansprüche 1 bis 5, wobei der Schlitten (1017) aus einem Sinterkörper aus einem porenfreien oder porösen Material besteht.

7. Magnetkopfschlitten nach Anspruch 6, wobei Mittel zum Halten eines Schmiermittels auf der Schlittenoberfläche vorgesehen sind.

8. Magneto-optisches Aufzeichnungsgerät mit:
einem Magnetkopf (1012), der ein Magnetfeld an eine magnetooptische Platte (1) anlegt,

einer Strahlenquelle und einem optischen System (2, 3, 4, 5, 6), die einen Laserstrahl auf die magneto-optische Platte richten,
Drehorgane zum Drehen der magneto-optischen Scheibe,
gekennzeichnet durch
einen Magnetkopfschlitten (1017) nach mindestens einem der Ansprüche 1 bis 7.

9. Magneto-optisches Aufzeichnungsgerät nach Anspruch 8, wobei eine Aufhängungsfeder (1013), die den Magnetkopfschlitten (1017) trägt, eine Drucklast nicht größer als 6 gw anlegt.

10. Magneto-optisches Aufzeichnungsgerät nach Anspruch 8, wobei die Kontaktstart-Stop(CS/S)-Operation in einem vorbestimmten Zeitintervall erfolgt, wenn das Gerät in seiner Startphase ist oder in angehaltenem Zustand oder wenn das Gerät in Betrieb ist.

11. Magneto-optisches Aufzeichnungsgerät nach Anspruch 8, wobei die Aufhängungsfeder (1013) den Magnetkopfschlitten (1017) mit einem Zapfen (134, 135) trägt, der einen linearen Kontakt mit der Aufhängungsfeder herstellt.

12. Magneto-optisches Aufzeichnungsgerät nach Anspruch 8, wobei der Magnetkopf (1012) die Informationsaufzeichnungsoperation in einem Zustand ausführt, in dem er aufgrund des Magnetkopfschlittens (1017) in einem Abstand von 10 bis 50 μm über der Oberfläche der magneto-optischen Platte (1) ist.

13. Magneto-optisches Aufzeichnungsgerät nach Anspruch 8, wobei die magneto-optische Platte (1) austauschbar ist.

14. Magneto-optisches Aufzeichnungsgerät nach Anspruch 8, wobei ein Magnetfeldbereich mit einer Fläche größer als 0,1 mm² durch das Magnetfeld erzeugt wird, welches von dem Magnetkopf (1012) an die magneto-optische Platte (1) angelegt wird.

## Revendications

1. Patin (1017) de tête magnétique, servant à porter une tête magnétique (1012) utilisée pour enregistrer un signal sur un disque magnéto-optique (1),
   caractérisé par
   au moins deux rails (11) de patin possédant chacun une largeur non inférieure à au moins 2 mm et une partie de bord avant rétrécie d'introduction d'air (12) pour produire un soulèvement de manière à faire flotter ledit patin et possédant un angle d'inclinaison $\Theta t$, avec $0 \leq \Theta t \leq 1°$, de sorte que la tête magnétique est séparée d'une surface du disque magnéto-optique par une distance non inférieure à 10 mm.

2. Patin de tête magnétique selon la revendication 1, dans lequel ledit patin (1017) possède une longueur non inférieure à 5 mm.

3. Patin de tête magnétique selon la revendication 1 ou 2, dans lequel le rapport entre la longueur de ladite partie rétrécie et la longueur totale du patin est choisi compris entre 0,1 et 0,5.

4. Patin de tête magnétique selon l'une quelconque des revendications 1 à 3, dans lequel ledit patin (1017) est du type à couronne possédant une surface de patin du second degré (107), et le sommet de ladite surface de patin, située en vis-à-vis dudit disque magnéto-optique (1), est situé dans une position, dans laquelle le rapport de la distance entre le sommet et le bord avant dudit patin à la longueur totale du patin est compris entre 0,1 et 0,6.

5. Patin de tête magnétique selon la revendication 4, dans lequel ledit sommet de ladite surface (107) de patin fait saillie sur une hauteur de 1 à 10 mm par rapport aux bords avant et arrière dudit patin.

6. Patin de tête magnétique selon l'une quelconque des revendications 1 à 5, dans lequel ledit patin (1017) est formé d'un corps fritté réalisé en un matériau sans pores ou un matériau poreux.

7. Patin de tête magnétique selon la revendication 6, dans lequel des moyens sont prévus pour retenir un lubrifiant sur la surface du patin.

8. Dispositif d'enregistrement magnéto-optique comprenant :
   une tête magnétique (1012) appliquant un champ magnétique à un disque magnéto-optique (1);
   une source de faisceau et un système optique (2,3,4,5,6) dirigeant un faisceau laser vers ledit disque magnéto-optique;
   des moyens d'entraînement en rotation pour faire tourner ledit disque magnéto-optique;
   caractérisé par un patin (1017) de tête magnétique selon au moins l'une des revendications 1 à 7.

9. Dispositif d'enregistrement magnéto-optique selon la revendication 8, dans lequel un ressort de suspension (1013) supportant ledit patin (1017) de tête magnétique applique une charge de compression non supérieure à 6 gw.

10. Dispositif d'enregistrement magnéto-optique selon la revendication 8, dans lequel une opération de démarrage/d'arrêt de contact (CS/S) est exécutée à un intervalle de temps prédéterminé lorsque ledit dispositif est dans son état de démarrage ou dans un état arrêté ou lorsque ledit dispositif est en fonctionnement.

11. Dispositif d'enregistrement magnéto-optique selon la revendication 8, dans lequel ledit ressort de suspension (1013) supporte ledit patin (1017) de tête magnétique au moyen d'un pivot (134,135) qui établit un contact linéaire avec ledit ressort de suspension.

12. Dispositif d'enregistrement magnéto-optique selon la revendication 8, dans lequel ladite tête magnétique (1012) exécute son opération d'enregistrement d'informations dans un état dans lequel elle flotte à une distance de 10 à 50 mm de la surface dudit disque magnéto-optique (1), sous l'effet dudit patin (1017) de tête magnétique.

13. Dispositif d'enregistrement magnéto-optique selon la revendication 8, dans lequel ledit disque magnéto-optique (1) est interchangeable.

14. Dispositif d'enregistrement magnéto-optique selon la revendication 8, dans lequel une zone de champ magnétique possédant une aire supérieure à environ 0,1 mm2 est formée par le champ magnétique appliqué audit disque magnéto-optique (1) à partir de ladite tête magnétique (1012).

# F I G. 1A

EP 0 390 221 B1

# F I G. 1B

# F I G. 2

PROTECTION FILM

RECORDING FILM

23 BASE

LASER BEAM

11

EP 0 390 221 B1

# FIG.3

# FIG.4

12

# F I G.5

FIG.5 graph: FLYING HEIGHT h (μm) vs SLIDER RAIL WIDTH Sw (mm)

Lx = 5.7 mm
W = 6.0 gw

LINEAR VELOCITY 20m/s

10m/s

PRESENT INVENTION

PRIOR ART

# F I G.6

FIG.6 graph: FLYING HEIGHT h (μm) vs PRESSURIZING LOAD W (gw)

Lx = 5.7mm
Sw= 7.6mm

PRESENT INVENTION       PRIOR ART

LINEAR VELOCITY 20m/s

10m/s

13

EP 0 390 221 B1

# F I G.7

FLYING HEIGHT h (μm)

SLIDER LENGTH Lx (mm)

LINEAR VELOCITY
20m/s
10m/s

$$\left(\begin{array}{l} Sw = 1.6mm \\ W = 6.0\ gw \end{array}\right.$$

# F I G.8

PRIOR ART  PESENT INVENTION  LINEAR VELOCITY
20m/s
10m/s

FLYING HEIGHT h (μm)

t/Lx

$$\left(\begin{array}{l} Lx = 5.7mm \\ Sw = 1.6mm \\ W = 6.0\ gw \end{array}\right.$$

14

# F I G.9

PRESENT INVENTION

FLYING HEIGHT h ($\mu$ m)

TAPER ANGLE $\theta$ t (°)

LINEAR VELOCITY
20 m/s

10 m/s

TAPER LENGTH =0.4mm

Lx=5.7mm
Sw=1.6mm
W=6.0 g w

# F I G.10

# FIG.11

PRESENT INVENTION

LINEAR VELOCITY
20m/s

10m/s

FLYING HEIGHT h ($\mu$m)

14
12
10
8
6
4
3

0          0.5          1.0

X/Lx

Lx = 10.5mm
Sw =  5.0mm
W =  5.0 gw

# FIG.12

PRESENT INVENTION

LINEAR VELOCITY
20m/s

10m/s

FLYING HEIGHT h ($\mu$m)

14
12
10
8
6
4
2

0          10          20

HEIGHT OF APEX PROJECTION $\delta$

Lx = 10.5mm
Sw =  5.0mm
W =  5.0 gw

EP 0 390 221 B1

## F I G.13A

131

133

132

## F I G.13B

131

132    134

## F I G.13C

131

135

132

FIG.14

EP 0 390 221 B1

# F I G.15

LINEAR VELOCITY 10m/s
W = 5.0gw
$\theta t = 0.83°$

FLYING HEIGHT h (μm)

20

10

A

O

0.5

5

10

15

SLIDER RAIL
WIDTH SW (mm)

1.0

TAPER LENGTH 1.5
t (mm)